# EUROPEAN PATENT APPLICATION

(11) **EP 4 120 168 A1**
(43) Date of publication of application: **18.01.2023**
(21) Application number: 22170240.0
(22) Date of filing: 27.04.2022
(51) Int. Cl.: G06Q 20/40, G06Q 20/04, G06Q 20/32, G06Q 20/20

(54) **TRANSACTION PROGRAM, TRANSACTION METHOD, AND STORE DEVICE**

(30) Priority: 16.07.2021 JP 2021118255
(71) Applicant: FUJITSU LIMITED, Kawasaki-shi, Kanagawa 211-8588 (JP)
(72) Inventor: Mizuno, Ken-ichi, Kawasaki-shi, Kanagawa, 211-8588 (JP); Araki, Tsuyoshi, Kawasaki-shi, Kanagawa, 211-8588 (JP); Denishi, Suzuka, Kawasaki-shi, Kanagawa, 211-8588 (JP); Moteki, Kyohei, Kawasaki-shi, Kanagawa, 211-8588 (JP); Morigaki, Akiya, Kawasaki-shi, Kanagawa, 211-8588 (JP); Kishi, Hiroyuki, Kawasaki-shi, Kanagawa, 211-8588 (JP); Tsuruoka, Masahiro, Kawasaki-shi, Kanagawa, 211-8588 (JP)
(74) Representative: Hoffmann Eitle

(57) **Abstract**

A transaction program that causes at least one computer to execute a process, the process includes transmitting transaction information to a user terminal; receiving result information acquired by processing payment of a transaction of the transaction information by a server, from the user terminal, the result information including identification information indicating the payment; storing the identification information associated with the transaction information in the one or more memories; and outputting a receipt including identification information.

## Description

### FIELD

The disclosed technology relates to a transaction program, a transaction method, and a store device.

### BACKGROUND

A technology regarding mobile payment has been proposed in which a procedure is performed using a smartphone or the like held by a user in a case where payment for purchasing a product in a store or the like is made with a credit card. For example, a payment processing system using a mobile terminal has been proposed that includes at least a store device that inputs purchase amount information of a product, a user's mobile terminal that stores card information, and a server that receives a card payment request from the mobile terminal. In this system, the store device transmits store purchase information, in which store identification (ID) information and a terminal ID for specifying a terminal that inputs a purchase amount of the product are added to the input purchase amount information of the product, to the mobile terminal and receives a payment result from the mobile terminal. Furthermore, the mobile terminal transmits payment information in which card information is added to the store purchase information to the server, receives the payment result from the server, and transmits the payment result to the store device. The server transmits the payment result based on the payment information to the mobile terminal.

Furthermore, for example, a payment processing system has been proposed in which a user terminal transmits a payment request including a store ID, a product payment amount, and card information acquired by reading a two-dimensional code output to a POS terminal to a conversion server. In this system, the conversion server specifies a setting item corresponding to the store ID included in the payment request using a conversion information storage unit that stores the setting item associated with the store ID, generates an authorization message according to the store, and transmits the generated message to an acquirer server. The user terminal outputs an authorization answer that is received from the acquirer server via the conversion server, and the POS terminal executes transaction processing using the authorization answer acquired from the user terminal.

Furthermore, for example, a payment system has been proposed in which information included in an information image displayed on a payment terminal is provided to a server via a user terminal and payment processing is executed. This system displays the information image including essential information that is commonly determined regardless of a type of a payment method used for payment on the payment terminal and makes the user terminal acquire the essential information in the information image. Then, the system makes a user select the payment method used for payment from among the plurality of types of payment methods via the user terminal and makes the user terminal transmit payment information including information for identifying the select payment method and the essential information to the server. Moreover, this system identifies the payment method on the basis of the payment information and makes the server execute the payment processing so as to perform the payment based on the essential information according to the identified payment method.

Japanese Laid-open Patent Publication No. 2005-115876, Japanese Laid-open Patent Publication No. 2016-173752, and Japanese Laid-open Patent Publication No. 2020-87263 are disclosed as related art.

### SUMMARY

### [TECHNICAL PROBLEM]

However, in a case where the payment processing is completed by the user terminal and the payment server, only information regarding the completed payment is registered in the store device. In this case, there is a problem in that, the payment processing on the payment server side is not connected to a transaction history of the store device side, and it is not possible to smoothly execute processing after the payment has been completed such as processing for cancelling the transaction, returning the product, or the like, inquiry processing, or the like.

As one aspect, an object of the disclosed technology is to smoothly execute processing after payment has been completed.

### [SOLUTION TO PROBLEM]

According to an aspect of the embodiments, a transaction program that causes at least one computer to execute a process, the process includes transmitting transaction information to a user terminal; receiving result information acquired by processing payment of a transaction of the transaction information by a server, from the user terminal, the result information including identification information indicating the payment; storing the identification information associated with the transaction information in the one or more memories; and outputting a receipt including identification information.

### [ADVANTAGEOUS EFFECTS OF INVENTION]

As one aspect, an effect is obtained that it is possible to smoothly execute processing after payment has been completed.

### BRIEF DESCRIPTION OF DRAWINGS

FIG. 1 is a block diagram illustrating a schematic configuration of a payment system;
FIG. 2 is a functional block diagram of a store device;
FIG. 3 is a diagram illustrating an example of a transaction information DB;
FIG. 4 is a functional block diagram of a user terminal;
FIG. 5 is a diagram for explaining acquisition of transaction information;
FIG. 6 is a diagram illustrating an example of a selection screen;
FIG. 7 is a diagram for explaining acquisition of payment result information;
FIG. 8 is a functional block diagram of a payment server;
FIG. 9 is a diagram illustrating an example of a user DB;
FIG. 10 is a diagram illustrating an example of a store DB;
FIG. 11 is a diagram illustrating an example of a payment result DB;
FIG. 12 is a block diagram illustrating a schematic configuration of a computer that functions as the store device;
FIG. 13 is a block diagram illustrating a schematic configuration of a computer that functions as the user terminal;
FIG. 14 is a block diagram illustrating a schematic configuration of a computer that functions as the payment server;
FIG. 15 is a sequence diagram illustrating processing of the payment system;
FIG. 16 is a flowchart illustrating an example of store-side transaction processing;
FIG. 17 is a flowchart illustrating an example of user-side transaction processing;
FIG. 18 is a flowchart illustrating an example of payment processing; and
FIG. 19 is a flowchart illustrating an example of transaction cancellation processing.

### DESCRIPTION OF EMBODIMENTS

Hereinafter, an example of an embodiment according to the disclosed technology will be described with reference to the drawings.

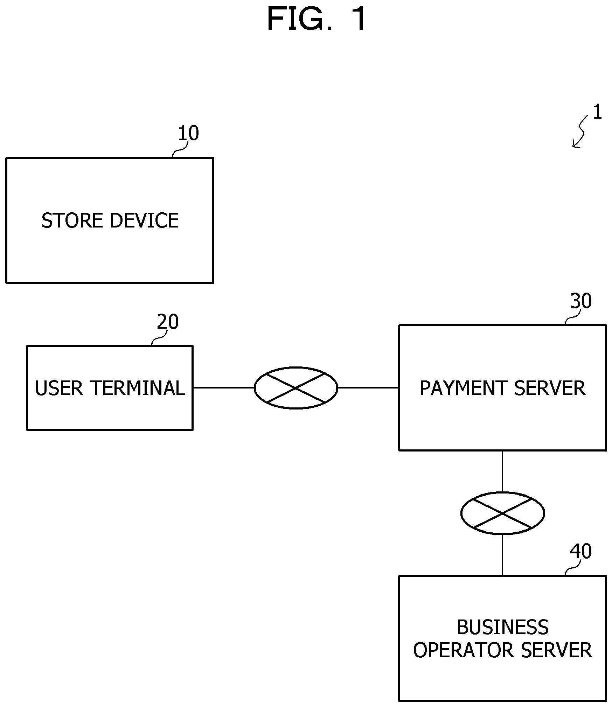

In FIG. 1, a schematic configuration of a payment system 1 according to the present embodiment is illustrated. As illustrated in FIG. 1, the payment system 1 according to the present embodiment includes a store device 10, a user terminal 20, a payment server 30, and a business operator server 40. The user terminal 20 and the payment server 30 are communicably connected to each other via the Internet such as a public line. Furthermore, the payment server 30 and the business operator server 40 are communicably connected to each other via a dedicated communication network. Note that the number of each component included in the payment system 1 is not limited to that in the example in FIG. 1.

The store device 10 is an information processing device for payment processing that is provided in a store where products and services are provided. The store device 10 is, for example, a point of sales (POS) terminal, a personal computer, a smartphone, a tablet terminal, or the like.

The user terminal 20 is an information processing terminal used by a user who receives a product or a service. The user terminal 20 is, for example, a smartphone, a tablet terminal, or the like. In the user terminal 20, an application (hereinafter, referred to as "payment application") for using the payment system 1 operates.

The payment server 30 is an information processing device under the jurisdiction of a payment center of a payment company or a payment agency. The payment server 30 is connected to the business operator server 40 and processes a payment processing request received from the user terminal 20. The business operator server 40 is an information processing device under jurisdiction of each payment company such as a credit card company, a bank, or the like.

Hereinafter, respective functional configurations of the store device 10, the user terminal 20, the payment server 30 will be described. Note that, because it is sufficient for the business operator server 40 to have a general functional configuration, detailed description will be omitted.

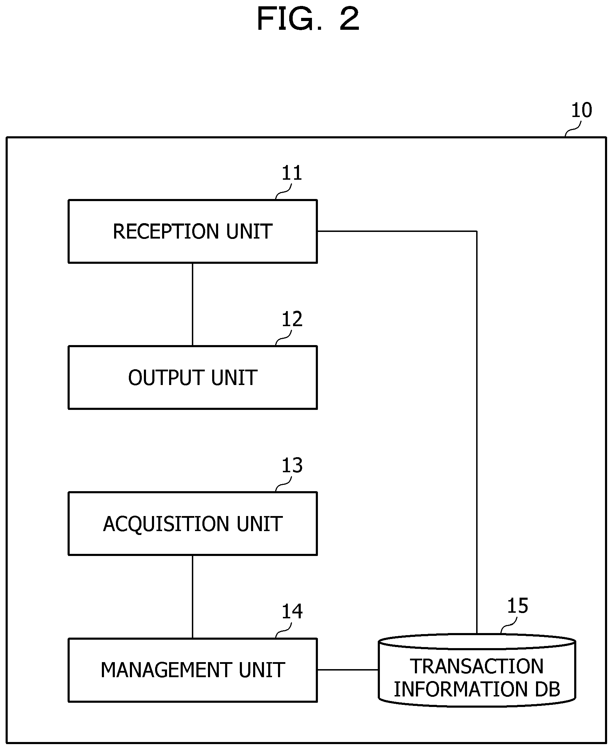

First, the functional configuration of the store device 10 will be described. As illustrated in FIG. 2, the store device 10 includes a reception unit 11, an output unit 12, an acquisition unit 13, and a management unit 14. Furthermore, a transaction information database (DB) 15 is stored in a predetermined storage region of the store device 10.

The reception unit 11 receives product information input by an operation of a store staff or the like. The product information includes information such as a product code that is identification information of a product purchased by a user and a payment amount of a product. The reception unit 11 generates transaction information including product information (product code, payment amount, or the like), a transaction serial number, a store device code, and a payment request date and time, and transfers the transaction information to the output unit 12 and stores the transaction information in the transaction information DB 15. The transaction serial number is identification information of a transaction of a device. The store device code is a number which is a combination of a store code that is identification information of a store and a device code that is identification information of the store device 10 in the store. The payment request date and time is a date and time when payment is requested and is, for example, a date and time when the transaction information is generated. Note that the transaction information is an example of first transaction information of the disclosed technology.

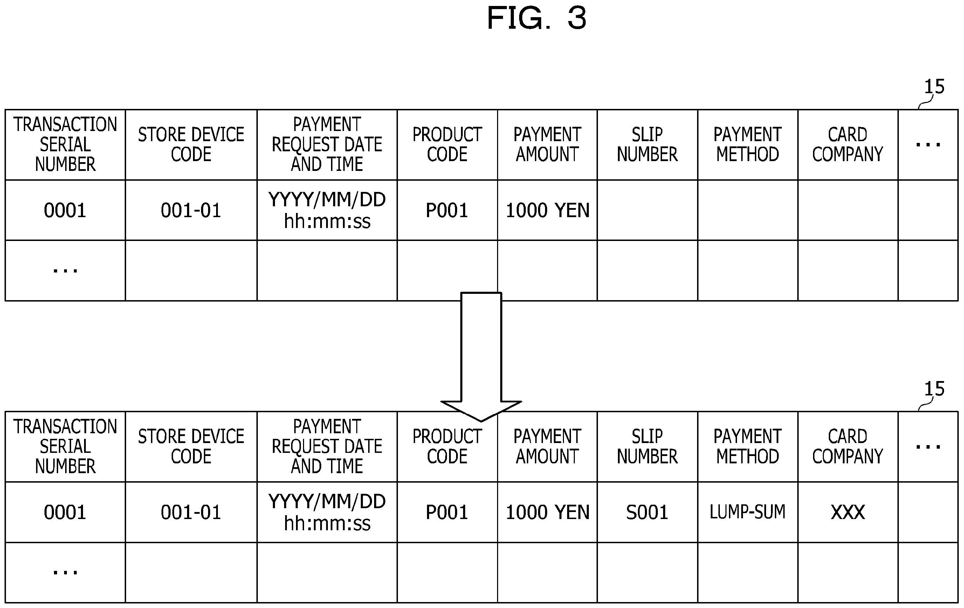

FIG. 3 illustrates an example of the transaction information DB 15. In the example in FIG. 3, the transaction information DB 15 stores the transaction serial number, the store device code, the payment request date and time, the product code, the payment amount, or the like included in the transaction information. Furthermore, the transaction information DB 15 also stores payment result information (details will be described later) including a slip number. At the time when the reception unit 11 stores the transaction information in the transaction information DB 15, the payment result information is blank as illustrated in the upper figure in FIG. 3.

The output unit 12 displays a code image such as a barcode, a Quick Response (QR) code (registered trademark), or the like indicating the transaction information transferred from the reception unit 11 on a display unit included in the store device 10 to be readable by the user terminal 20. Furthermore, in a case where a slip number associated with a transaction for executing cancellation processing is notified from the management unit 14 (details will be described later), the output unit 12 displays the notified slip number and a code image indicating an instruction to cancel the transaction associated with the slip number on the display unit included in the store device 10 to be readable by the user terminal 20.

Furthermore, the output unit 12 outputs a receipt that includes the product code, the payment amount, the transaction serial number, the payment request date and time, a product name of a product indicated by the product code, or the like included in the transaction information from a printer. Furthermore, in a case where the receipt is output after completion processing by the management unit 14 to be described later, the output unit 12 may also include the slip number in the receipt. Note that the output unit 12 may also output the code image described above using a printer.

The acquisition unit 13 acquires, from the user terminal 20, the payment result information that indicates that the payment processing is completed and includes the slip number, for specifying the payment processing executed by the payment server 30 for the transaction between the user and the store, issued by the user terminal 20 or the payment server 30. The transaction between the user and the store is an example of a first transaction of the disclosed technology, and the slip number is an example of first identification information of the disclosed technology. The payment result information includes information such as a payment method, card company information, an approval result, or a payment completion date and time, in addition to the slip number. Details of each piece of the information included in the payment result information will be described later.

Specifically, for example, the acquisition unit 13 makes a reading device read the code image such as the barcode or the QR code (registered trademark) indicating the transaction information and the payment result information, displayed on the display unit of the user terminal 20 and acquires the transaction information and the payment result information indicated by the code image read by the reading device from the reading device. The reading device is a camera, a barcode reader, a scanner, or the like. The acquisition unit 13 transfers the acquired transaction information and payment result information to the management unit 14.

The management unit 14 associates the slip number with the transaction on the basis of the transaction information and the payment result information transferred from the acquisition unit 13 and executes transaction completion processing. Specifically, for example, the management unit 14 collates the transaction information transferred from the acquisition unit 13 with the transaction information stored in the transaction information DB 15 and determines consistency of the transaction. In a case where the consistency of the transaction can be confirmed, the management unit 14 stores the payment result information transferred from the acquisition unit 13 in association with the transaction information stored in the transaction information DB 15. In the lower figure in FIG. 3, an example of the transaction information DB 15 after the completion processing is illustrated. In the example in FIG. 3, an example is illustrated in which the information regarding the slip number, the payment method, the card company, or the like that is a part of the payment result information is stored in association with the transaction information. Note that there is no need to associate all the pieces of the information included in the payment result information with the transaction information, and it is sufficient to store at least the slip number of the payment result information in association with the transaction information.

Furthermore, in a case where information for specifying a transaction to be canceled is designated, the management unit 14 specifies a slip number associated with the transaction indicated by the designated information from the transaction information DB 15 and notifies the output unit 12 of the specified slip number. A user who holds a receipt received from the store after the transaction tells information written on the receipt to a staff in the store so that the information for specifying the transaction to be canceled is input to the store device 10 by the staff. The information for specifying the transaction to be canceled is, for example, a transaction serial number, a combination of the payment completion date and time and the product code, a slip number, or the like.

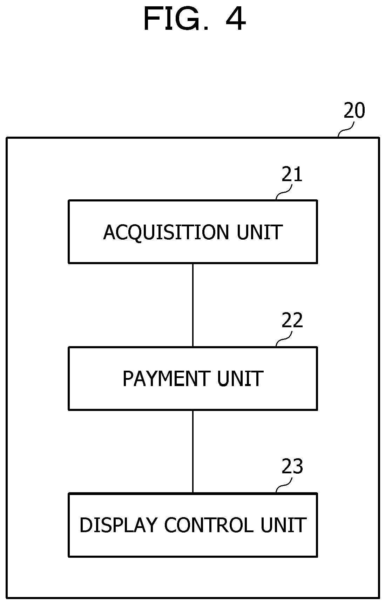

Next, the functional configuration of the user terminal 20 will be described. As illustrated in FIG. 4, the user terminal 20 includes an acquisition unit 21, a payment unit 22, and a display control unit 23.

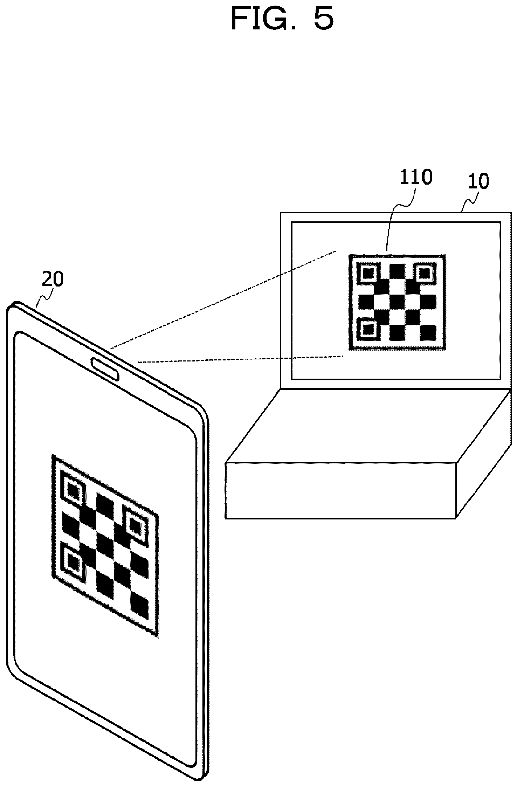

The acquisition unit 21 acquires the transaction information from the store device 10. Specifically, for example, as illustrated in FIG. 5, the acquisition unit 21 reads a code image 110 indicating the transaction information displayed on the display unit of the store device 10 by a reading unit included in the user terminal 20 so as to acquire transaction information indicated by the code image 110. The reading unit is, for example, a camera. The acquisition unit 21 transfers the acquired transaction information to the payment unit 22.

The payment unit 22 requests the payment server 30 to execute the payment processing. Specifically, for example, the payment unit 22 transmits a payment method inquiry including a store device code included in the transaction information transferred from the acquisition unit 21 and a user ID that is identification information of a user who uses the payment application to the payment server 30. The payment method inquiry is to inquire a payment method for each credit card that can be used in the store that is a target of the transaction. The payment unit 22 acquires options of the payment method (details will be described later) transmitted from the payment server 30 in response to the payment method inquiry, displays a payment method selection screen based on the acquired options of the payment method on the display unit, and accepts selection of the payment method from the user.

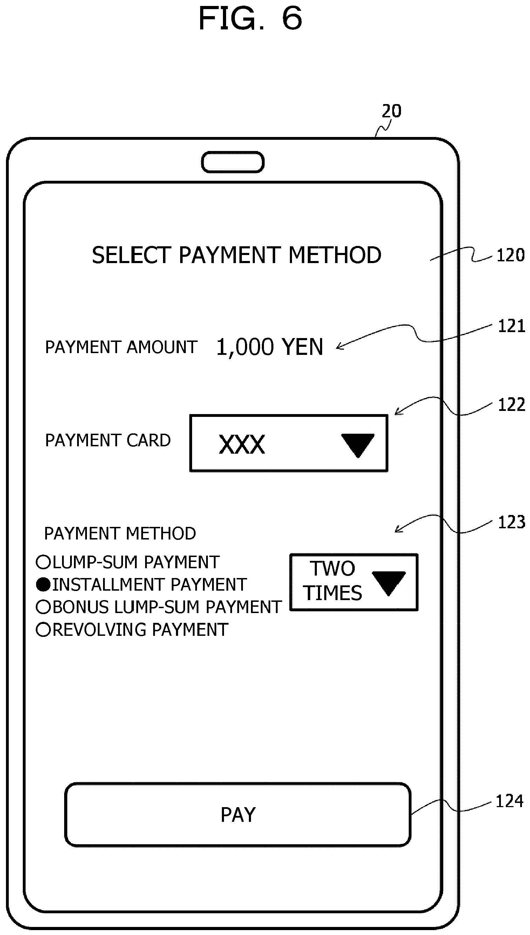

FIG. 6 illustrates an example of a selection screen 120. In the example in FIG. 6, the selection screen 120 includes a displayed payment amount 121 and a selection box 122 used to select a payment card. The payment card is card company information of a credit card, used in the payment application, registered by a user via the payment application in advance. The card company information is a company name, an identification code, or the like of a card company. In a case where the plurality of credit cards is registered, card company information of a credit card selected from among the registered credit cards displayed in a list is displayed in the selection box 122 as card company information of a credit card to be used for payment of this transaction. Furthermore, the selection screen 120 includes a payment method selection region 123. The payment methods include lump-sum payment, installment payment, bonus lump-sum payment, revolving payment, or the like. In the payment method selection region 123, payment methods that can be used in the store to be the transaction target from among these payment methods are displayed in a selectable manner. FIG. 6 illustrates an example in which any one of the payment methods is selected using a radio button. Furthermore, the payment method selection region 123 includes a selection box used to select the number of available installments for the installment payment.

Furthermore, the selection screen 120 includes a payment button 124 used to fix the payment by the selected payment method. When the payment method is selected and the payment button 124 is selected, the payment unit 22 transmits a payment processing request including the transaction information transferred from the acquisition unit 21 and the payment card and the payment method selected on the selection screen 120 to the payment server 30. Note that there is no need for the payment unit 22 to include all the pieces of transaction information in the payment processing request, and it is sufficient to include at least the payment amount and the store device code of the transaction information. The payment unit 22 acquires payment result information transmitted from the payment server 30 in response to the payment processing request and transfers the acquired payment result information to the display control unit 23.

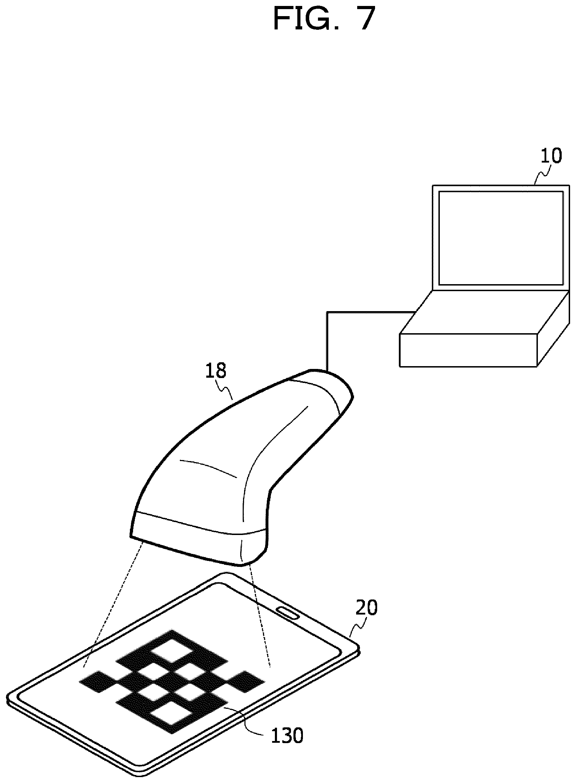

The display control unit 23 outputs information including the payment result information transferred from the payment unit 22 to the store device 10. Specifically, for example, the display control unit 23 displays a code image indicating the transaction information acquired by the acquisition unit 21 and the payment result information on the display unit to be readable by the reading device connected to the store device 10. As a result, as illustrated in FIG. 7, a code image 130 displayed on the display unit of the user terminal 20 is read by a reading device 18, and transaction information and payment result information indicated by the read code image are acquired by the store device 10.

Note that, in a case where an approval result included in the payment result information indicates an error, the display control unit 23 displays an error message instead of the code image. The error message may be, for example, a message indicating that the payment is not completed, a message that prompts the user to reselect the payment method or the payment card and request payment processing again, a message that prompts the user to switch to another payment method such as cash payment, or the like.

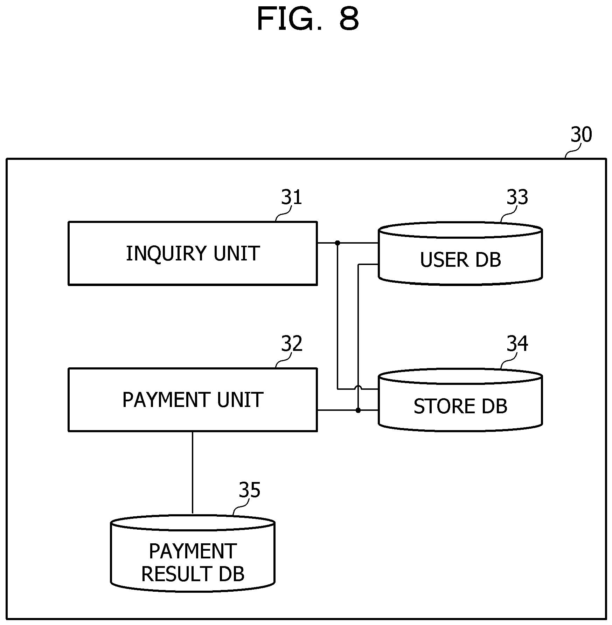

Next, the functional configuration of the payment server 30 will be described. As illustrated in FIG. 8, the payment server 30 includes an inquiry unit 31 and a payment unit 32. Furthermore, a user DB 33, a store DB 34, and a payment result DB 35 are stored in a predetermined storage region of the payment server 30.

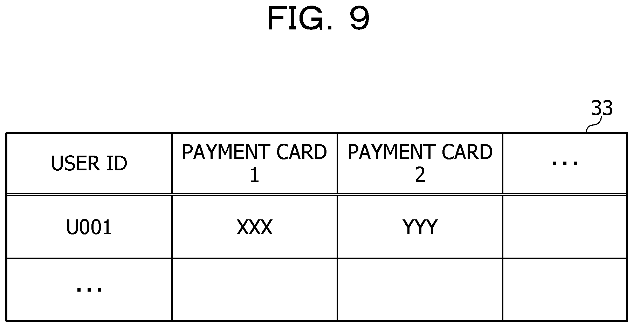

The user DB 33 stores information regarding the credit card registered by a user who uses the payment system 1 as a credit card used for the payment application in advance. FIG. 9 illustrates an example of the user DB 33. In the example in FIG. 9, information regarding one or more registered credit cards is stored as "payment card" in association with the user ID. The information regarding the credit card includes card company information, a card number, an expiration date, or the like.

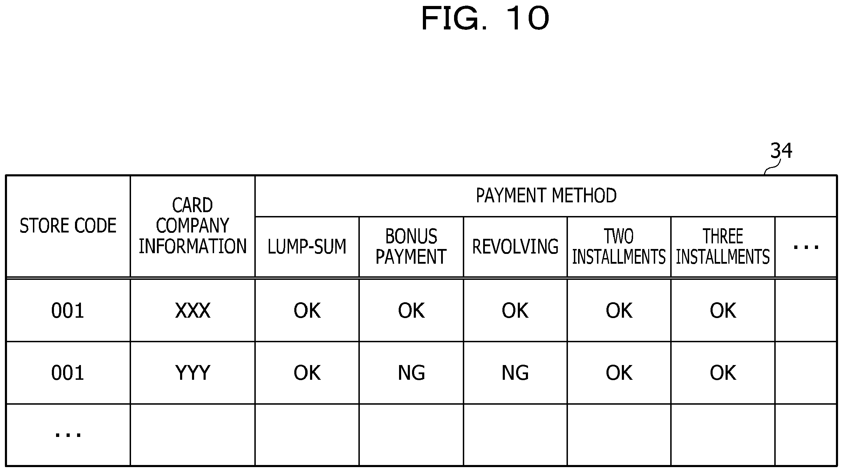

The store DB 34 stores the card company information of the credit card and the payment method that can be used in the store using the payment system 1. FIG. 10 illustrates an example of the store DB 34. In the example in FIG. 10, in association with a store code, card company information of a credit card that can be used in a store indicated by the store code and information indicating whether or not each payment method can be used are stored. In the example in FIG. 10, an available payment method is represented as "OK", and an unusable payment method is represented as "NG". Furthermore, in the example in FIG. 10, in the payment method, "lump-sum" represents lump-sum payment, "bonus payment" represents bonus lump-sum payment, "revolving" represents revolving payment, and "two installments (or three)" represents installment payment of two times (or three times) of payment.

When receiving the payment method inquiry from the user terminal 20, the inquiry unit 31 extracts the card company information from the information regarding the credit card associated with the user ID included in the payment method inquiry in the user DB 33. Then, the inquiry unit 31 extracts an available payment method from the payment methods corresponding to the store code of the store device code included in the payment method inquiry and corresponding to the extracted card company information and transmits the extracted payment method to the user terminal 20 as an option of the payment method.

When receiving the payment processing request from the user terminal 20, the payment unit 32 assigns a slip number that is identification information of payment processing to the payment processing. Note that, in the present embodiment, a case will be described where the payment server 30 assigns a slip number. However, the user terminal 20 may also assign a slip number. In a case where the user terminal 20 assigns the slip number, a slip number that can uniquely identify payment processing including a payment processing request from another user terminal 20, for example, a slip number including a user ID, a date and time, or the like may also be assigned.

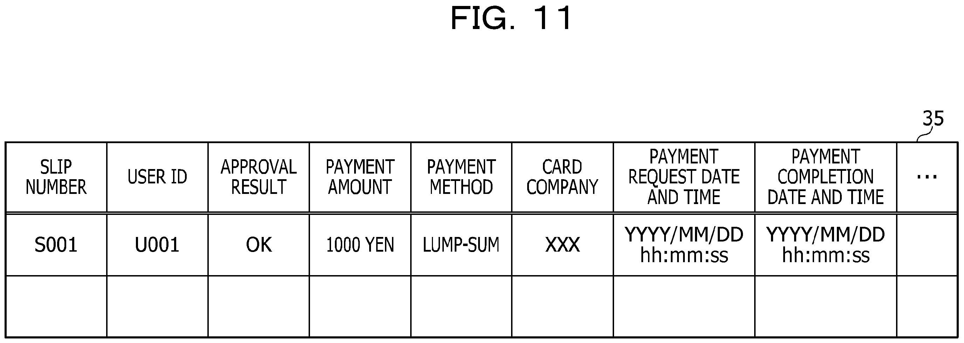

The payment unit 32 transmits a payment approval request including the user ID, the payment amount, the card number, or the like to the business operator server 40 of the corresponding card company on the basis of the information regarding the payment card included in the payment processing request. Upon receiving an approval result in response to the approval request from the business operator server 40, the payment unit 32 stores the payment result information including the slip number in the payment result DB 35 and transmits the payment result information to the user terminal 20. FIG. 11 illustrates an example of the payment result DB 35. In the example in FIG. 11, the payment result DB 35 stores information such as a slip number, a user ID, an approval result, a payment amount, a payment method, card company information, a payment request date and time, a payment completion date and time, or the like for each payment processing.

Next, a hardware configuration of each of the store device 10, the user terminal 20, and the payment server 30 will be described.

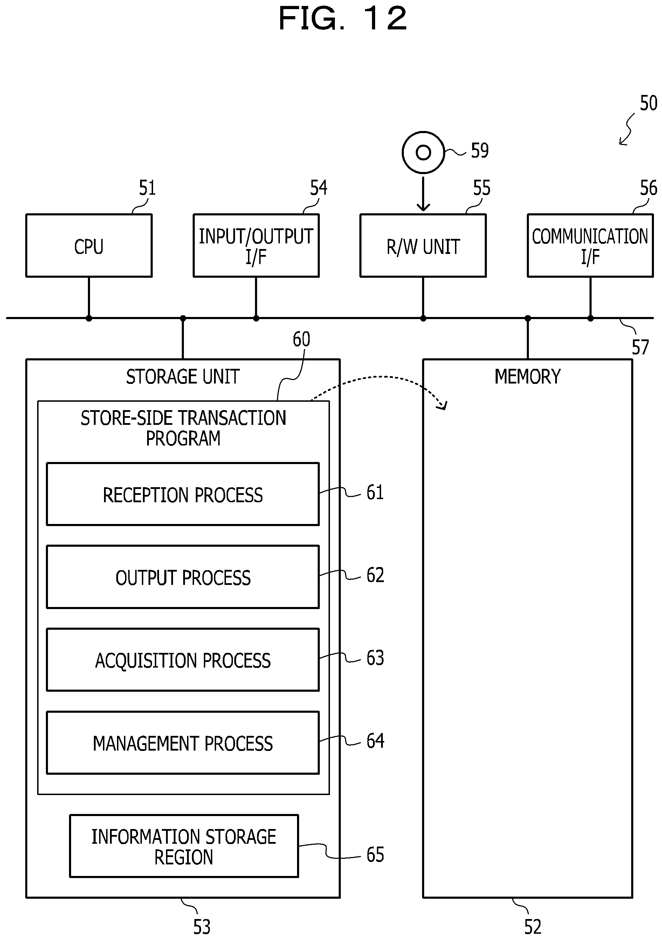

The store device 10 may be implemented by a computer 50 illustrated in FIG. 12, for example. The computer 50 includes a central processing unit (CPU) 51, a memory 52 as a temporary storage region, and a nonvolatile storage unit 53. Furthermore, the computer 50 includes an input/output interface (I/F) 54 connected to an input/output device such as an input unit and a display unit implemented by a touch panel display or the like, a printer, or the reading device 18. Furthermore, the computer 50 also includes a read/write (R/W) unit 55 that controls reading and writing of data from and to a storage medium 59, and a communication I/F 56 connected to a network such as the Internet. The CPU 51, the memory 52, the storage unit 53, the input/output I/F 54, the R/W unit 55, and the communication I/F 56 are connected to each other via a bus 57.

The storage unit 53 may be implemented by a hard disk drive (HDD), a solid state drive (SSD), a flash memory, or the like. The storage unit 53 as the storage medium stores a store-side transaction program 60 for causing the computer 50 to function as the store device 10. The store-side transaction program 60 includes a reception process 61, an output process 62, an acquisition process 63, and a management process 64. Furthermore, the storage unit 53 includes an information storage region 65 that stores information included in the transaction information DB 15.

The CPU 51 reads the store-side transaction program 60 from the storage unit 53, develops the store-side transaction program 60 on the memory 52, and sequentially executes the processes included in the store-side transaction program 60. By executing the reception process 61, the CPU 51 operates as the reception unit 11 illustrated in FIG. 2. Furthermore, by executing the output process 62, the CPU 51 operates as the output unit 12 illustrated in FIG. 2. Furthermore, by executing the acquisition process 63, the CPU 51 operates as the acquisition unit 13 illustrated in FIG. 2. Furthermore, by executing the management process 64, the CPU 51 operates as the management unit 14 illustrated in FIG. 2. Furthermore, the CPU 51 reads the information from the information storage region 65 and develops the transaction information DB 15 on the memory 52. As a result, the computer 50 that has executed the store-side transaction program 60 functions as the store device 10. Note that the CPU 51 that executes the program is hardware.

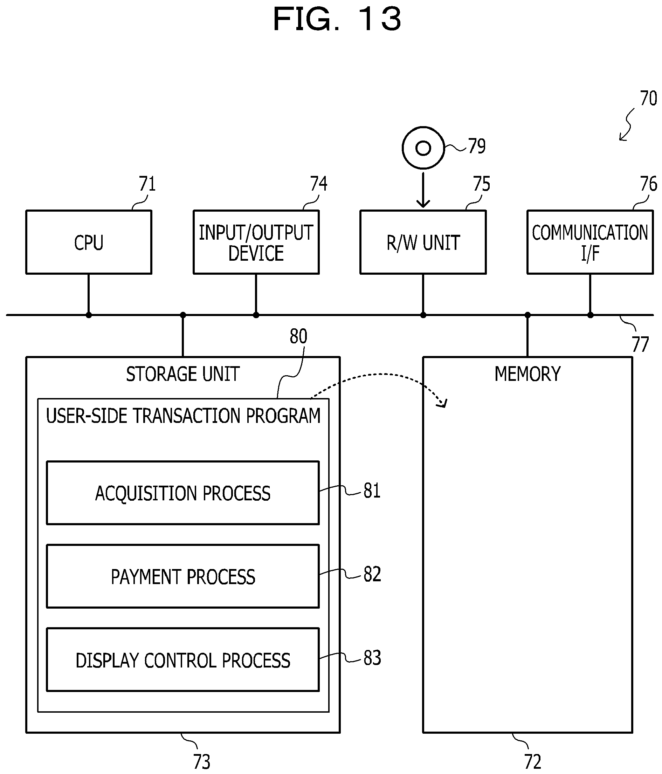

The user terminal 20 may be implemented by a computer 70 illustrated in FIG. 13, for example. The computer 70 includes a CPU 71, a memory 72 as a temporary storage region, and a nonvolatile storage unit 73. Furthermore, the computer 70 includes an input/output device 74 including an input unit and a display unit implemented by a touch panel display or the like, a camera, or the like, a R/W unit 75 that controls reading and writing of data from and to a storage medium 79, and a communication I/F 76. The CPU 71, the memory 72, the storage unit 73, the input/output device 74, the R/W unit 75, and the communication I/F 76 are connected to each other via a bus 77.

The storage unit 73 as the storage medium stores a user-side transaction program 80 for causing the computer 70 to function as the user terminal 20. The user-side transaction program 80 includes an acquisition process 81, a payment process 82, and a display control process 83.

The CPU 71 reads the user-side transaction program 80 from the storage unit 73, develops the user-side transaction program 80 on the memory 72, and sequentially executes the processes included in the user-side transaction program 80. By executing the acquisition process 81, the CPU 71 operates as the acquisition unit 21 illustrated in FIG. 4. Furthermore, by executing the payment process 82, the CPU 71 operates as the payment unit 22 illustrated in FIG. 4. Furthermore, by executing the display control process 83, the CPU 71 operates as the display control unit 23 illustrated FIG. 4. As a result, the computer 70 that has executed the user-side transaction program 80 functions as the user terminal 20. Note that the CPU 71 that executes the program is hardware.

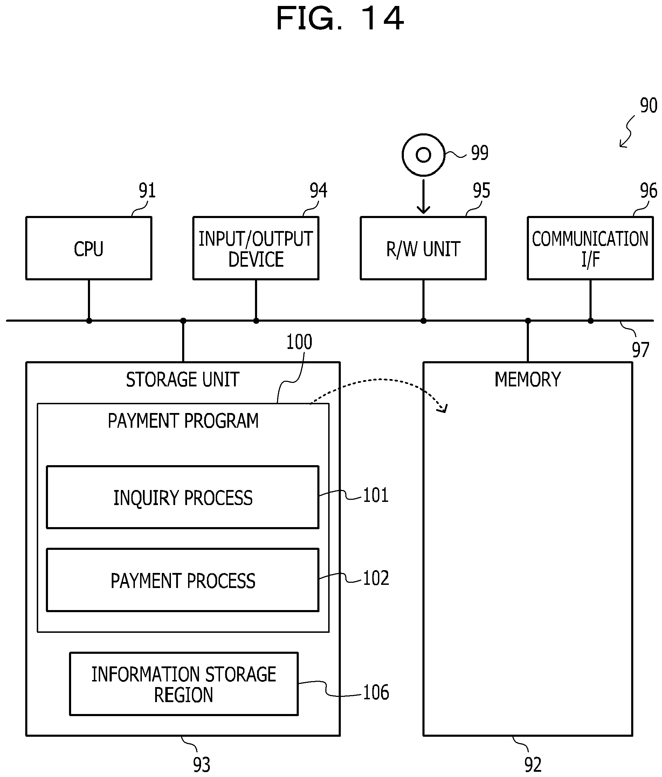

The payment server 30 may be implemented by a computer 90 illustrated in FIG. 14, for example. The computer 90 includes a CPU 91, a memory 92 as a temporary storage region, and a nonvolatile storage unit 93. Furthermore, the computer 90 includes an input/output device 94, a R/W unit 95 that controls reading and writing of data from and to a storage medium 99, and a communication I/F 96. The CPU 91, the memory 92, the storage unit 93, the input/output device 94, the R/W unit 95, and the communication I/F 96 are connected to each other via a bus 97.

The storage unit 93 as the storage medium stores a payment program 100 for causing the computer 90 to function as the payment server 30. The payment program 100 includes an inquiry process 101 and a payment process 102. Furthermore, the storage unit 93 includes an information storage region 106 that stores information included in each of the user DB 33, the store DB 34, and the payment result DB 35.

The CPU 91 reads the payment program 100 from the storage unit 93, develops the payment program 100 on the memory 92, and sequentially executes the processes included in the payment program 100. By executing the inquiry process 101, the CPU 91 operates as the inquiry unit 31 illustrated in FIG. 8. Furthermore, by executing the payment process 102, the CPU 91 operates as the payment unit 32 illustrated in FIG. 8. Furthermore, the CPU 91 reads the information from the information storage region 106 and develops each of the user DB 33, the store DB 34, and the payment result DB 35 on the memory 92. As a result, the computer 90 that has executed the payment program 100 functions as the payment server 30. Note that the CPU 91 that executes the program is hardware.

Note that, functions implemented by each program can also be implemented, for example, by a semiconductor integrated circuit, in more detail, an application specific integrated circuit (ASIC) or the like.

Next, an action of the payment system 1 according to the present embodiment will be described.

First, the store that uses the payment system 1 registers card company information and a payment method of an available credit card in the payment server 30. Furthermore, functions used to use the payment system 1, for example, a function for displaying a code image, a function for acquiring the code image, a function for acquiring and managing the payment result information, or the like are added to the store device 10. The payment server 30 stores the information registered from the store device 10 in the store DB 34. Furthermore, a user who uses the payment system 1 installs a payment application in the user terminal 20 and registers information regarding a payment card used for the payment application in the payment server 30. The payment server 30 stores the information registered in the user terminal 20 in the user DB 33.

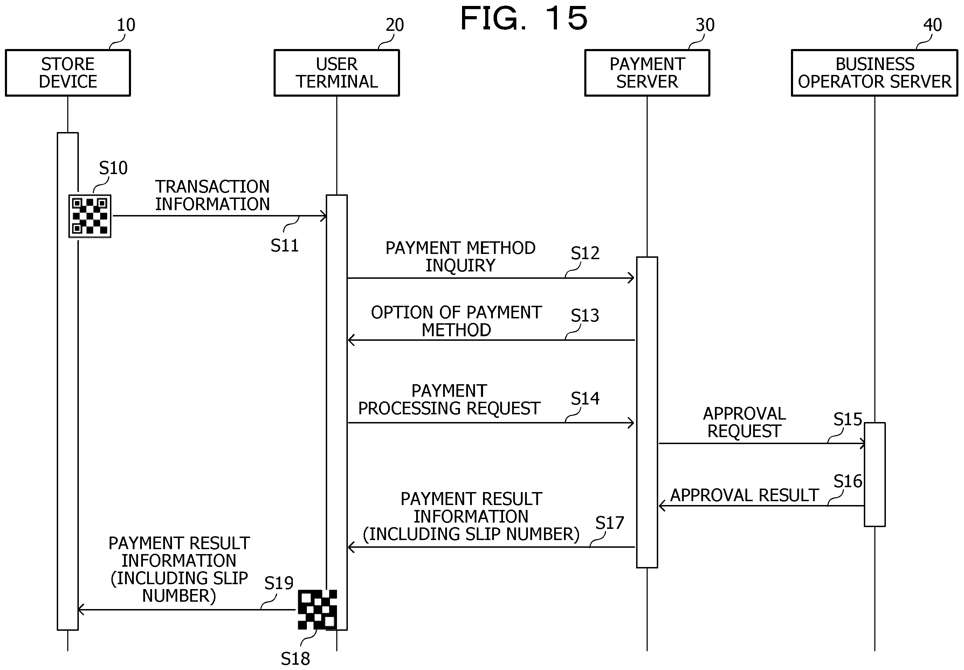

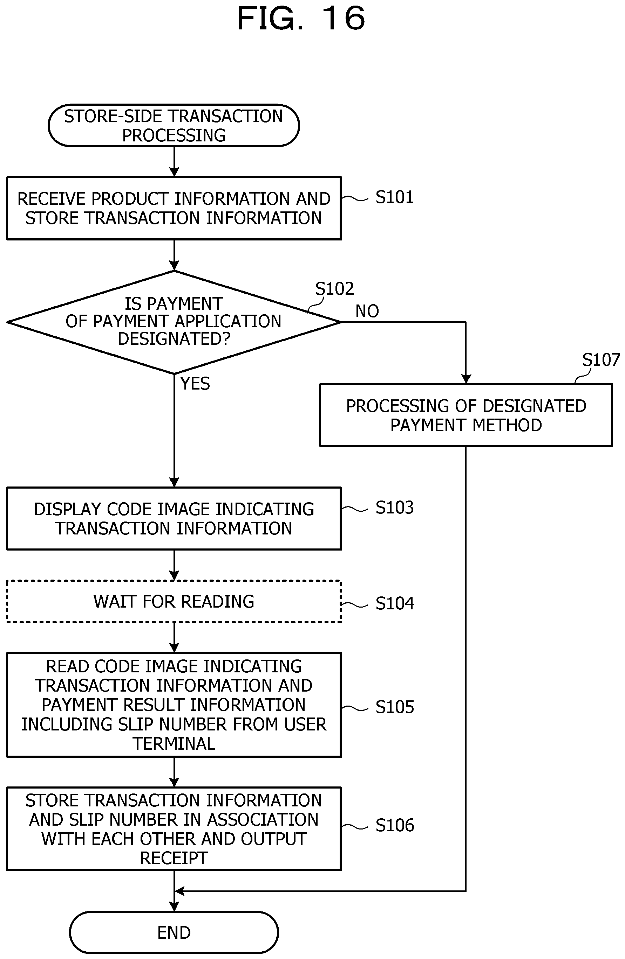

When the user purchases a product or the like in the store, a staff of the store inputs product information regarding the product purchased by the user into the store device 10. Then, when the staff tells a payment amount to the user or displays the payment amount on the display unit of the store device 10 and the user tells that the user uses the payment system 1, processing illustrated in the sequence diagram in FIG. 15 starts. With reference to the sequence diagram in FIG. 15, exchange of information between the store device 10, the user terminal 20, the payment server 30, and the business operator server 40 will be mainly described. Detailed processing of each of the store device 10, the user terminal 20, and the payment server 30 will be described with reference to the flowcharts illustrated in FIGs. 16 to 19.

First, with reference to the sequence diagram illustrated in FIG. 15, the exchange of the information between the store device 10, the user terminal 20, the payment server 30, and the business operator server 40 will be described.

When the store device 10 displays a code image indicating transaction information on the display unit (step S10), the user terminal 20 acquires the transaction information by reading the code image (step S11). The user terminal 20 transmits a payment method inquiry to the payment server 30 on the basis of the acquired transaction information (step S12), and the payment server 30 returns payment method options to the user terminal 20 (step S13).

The user terminal 20 transmits a payment processing request based on a payment card and a payment method selected by a user and the transaction information to the payment server 30 (step S14). The payment server 30 transmits an approval request to the business operator server 40 on the basis of the payment processing request (step S15), and the business operator server 40 returns an approval result to the payment server 30 (step S16). The payment server 30 transmits payment result information including a slip number to the user terminal 20 (step S17). When the user terminal 20 displays a code image indicating the transaction information and the payment result information on the display unit (step S18), the store device 10 acquires the transaction information and the payment result information indicated by the code image read by the reading device (step S19) and stores the transaction and the slip number in association with each other.

Next, the store-side transaction processing executed by the store device 10 will be described with reference to FIG. 16. The store-side transaction processing is an example of a transaction method of the disclosed technology.

In step S101, the reception unit 11 receives product information including a product code, a payment amount, or the like, generates transaction information including the product information, a transaction serial number, a store device code, and a payment request date and time, and stores the transaction information in the transaction information DB 15. Next, in step S102, for example, the reception unit 11 determines whether or not a command for selecting payment of the payment system 1 has been input so as to determine whether or not a user has designated to perform payment with the payment application. In a case where the payment with the payment application is designated, the procedure proceeds to step S103, and in a case where another payment method is designated, the procedure proceeds to step S107, and the store device 10 executes processing according to the designated payment method, and the store-side transaction processing ends.

In step S103, the reception unit 11 transfers the transaction information to the output unit 12, and the output unit 12 displays a code image indicating the transaction information transferred from the reception unit 11 on the display unit included in the store device 10 to be readable by the user terminal 20. Next, in step S104, the store device 10 is in a standby state until the code image indicating the payment result information is presented by a user. Next, in step S105, the acquisition unit 13 makes the reading device read the code image indicating the transaction information and the payment result information displayed on the display unit of the user terminal 20 and acquires the transaction information and the payment result information including the slip number indicated by the code image read by the reading device from the reading device. The acquisition unit 13 transfers the acquired payment result information to the management unit 14.

Next, in step S106, the management unit 14 executes completion processing for storing the payment result information including the slip number in association with the transaction information stored in the transaction information DB 15 by the reception unit 11. Furthermore, the output unit 12 outputs a receipt including the product code, the payment amount, the transaction serial number, the payment request date and time, and the product name of the product indicated by the product code, or the like included in the transaction information from the printer, and the store-side transaction processing ends. The output receipt is passed to the user.

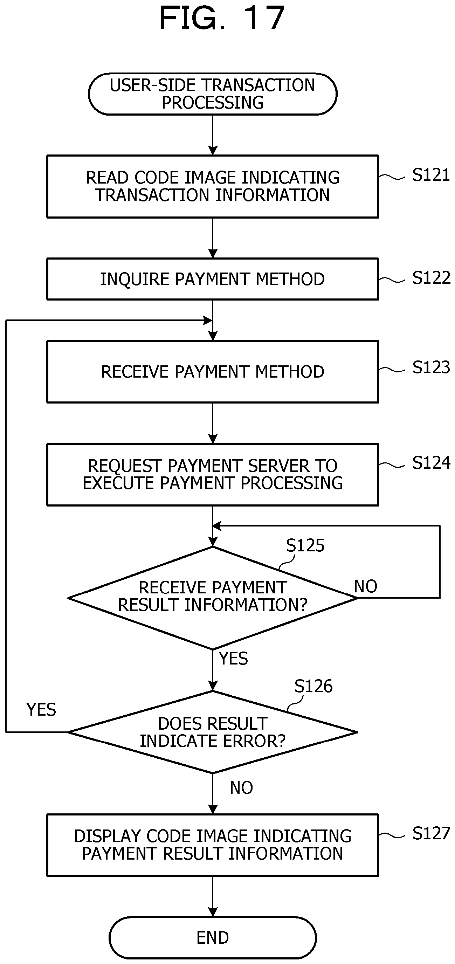

Next, the user-side transaction processing executed by the user terminal 20 will be described with reference to FIG. 17.

In step S121, the acquisition unit 21 reads a code image indicating transaction information displayed on the display unit of the store device 10 by the reading unit included in the user terminal 20 so as to acquire the transaction information indicated by the code image and transfers the transaction information to the payment unit 22. Next, in step S122, the payment unit 22 transmits a payment method inquiry including a store device code included in the transaction information transferred from the acquisition unit 21 and a user ID of a user who uses the payment application to the payment server 30. Next, in step S123, the payment unit 22 acquires options of the payment method transmitted from the payment server 30 in response to the payment method inquiry, displays a payment method selection screen based on the acquired options of the payment method on the display unit, and accepts selection of the payment method from the user. Next, in step S124, the payment unit 22 transmits a payment processing request including the transaction information transferred from the acquisition unit 21 and the payment card and the payment method selected on the selection screen 120 to the payment server 30.

Next, in step S125, the payment unit 22 determines whether or not payment result information is received from the payment server 30. In a case where the payment result information is received, the procedure proceeds to step S126, and in a case where the payment result information is not received, the determination in this step is repeated. In step S126, the payment unit 22 transfers the payment result information to the display control unit 23, and the display control unit 23 determines whether or not an approval result included in the payment result information is an error. In a case where the approval result is an error, the display control unit 23 displays an error message on the display unit of the user terminal 20, and the procedure returns to step S123. In a case where the approval result is not an error, the procedure proceeds to step S127, and the display control unit 23 displays the code image indicating the payment result information on the display unit of the user terminal 20 to be readable by the reading device connected to the store device 10. Then, the user-side transaction processing ends.

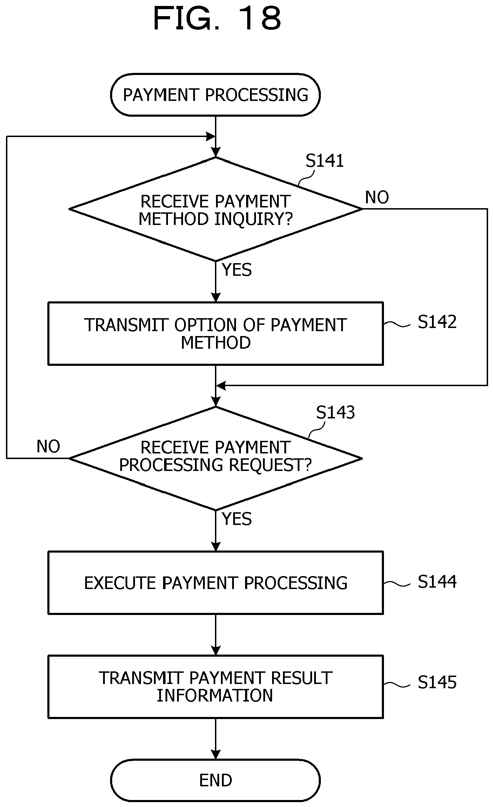

Next, the payment processing executed by the payment server 30 will be described with reference to FIG. 18.

In step S141, the inquiry unit 31 determines whether or not a payment method inquiry is received from the user terminal 20. In a case where the payment method inquiry is received, the procedure proceeds to step S142, and in a case where the payment method inquiry is not received, the procedure proceeds to step S143. In step S142, the inquiry unit 31 extracts the card company information from the information regarding the credit card associated with the user ID included in the payment method inquiry in the user DB 33. Then, the inquiry unit 31 extracts an available payment method from the payment methods corresponding to the store code of the store device code included in the payment method inquiry and corresponding to the extracted card company information and transmits the extracted payment method to the user terminal 20 as an option of the payment method.

Next, in step S143, the payment unit 32 determines whether or not the payment processing request is received from the user terminal 20. In a case where the payment processing request is received, the procedure proceeds to step S144, and in a case where the payment processing request is not received, the procedure returns to step S141. In step S144, the payment unit 32 assigns a slip number to the payment processing. Then, the payment unit 32 transmits a payment approval request including the user ID, the payment amount, the card number, or the like to the business operator server 40 of the corresponding card company on the basis of the information regarding the payment card included in the payment processing request. When the payment unit 32 receives an approval result with respect to the approval request from the business operator server 40, the procedure proceeds to step S145. In step S145, the payment unit 32 stores the payment result information including the slip number in the payment result DB 35 and transmits the payment result information to the user terminal 20, and the payment processing ends.

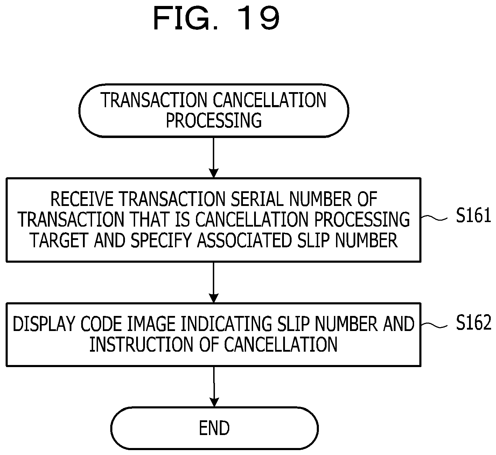

Next, the transaction cancellation processing executed by the store device 10 will be described with reference to FIG. 19. The transaction cancellation processing is executed when the product purchase is canceled, when the product is returned, or the like regarding the transaction of which the payment has been completed with the payment application. For example, when the user who holds the receipt received from the store after the transaction tells information written on the receipt to the staff in the store so that the information for specifying the transaction to be canceled is input to the store device 10 by the staff, the transaction cancellation processing is started. Here, it is assumed that a transaction serial number written on the receipt be input as the information for specifying the transaction to be canceled.

In step S161, the management unit 14 receives the transaction serial number input to the store device 10, specifies a slip number associated with the transaction indicated by the received transaction serial number from the transaction information DB 15, and notifies the output unit 12 of the specified slip number. Next, in step S162, the output unit 12 displays a code image indicating the slip number notified from the management unit 14 and an instruction to cancel the transaction associated with the slip number on the display unit included in the store device 10 to be readable by the user terminal 20, and the transaction cancellation processing ends.

The user terminal 20 reads the code image for the cancellation processing displayed on the display unit of the store device 10, and the user terminal 20 transmits the read information to the payment server 30, so that the cancellation processing of the payment specified by the slip number is requested. As a result, the payment server 30 executes the cancellation processing of the payment specified by the slip number.

Note that, in a case where the slip number is written on the receipt, it is sufficient to directly receive the slip number by the store device 10, to omit the processing in step S161 described above, and execute the processing in step S162.

As described above, according to the payment system according to the present embodiment, the store device acquires transaction information regarding a transaction between a user and a store. Furthermore, the store device acquires payment result information, indicating that payment processing is completed, including a slip number for specifying the payment processing executed by the payment server regarding the transaction described above issued by the user terminal or the payment server from the user terminal. Then, the store device associates the slip number with the transaction described above on the basis of the payment result information and executes transaction completion processing. As a result, because the slip number for specifying the payment processing executed between the user terminal and the payment server can be shared with the store device, processing after the payment completion can be smoothly executed.

Furthermore, according to the payment system according to the present embodiment, by adding a function for sharing the payment result information to the store device, it is possible to provide a common payment method that can be used in any store. Therefore, a user can use the same payment application in any store. Furthermore, according to the payment system according to the present embodiment, because the user can select a desired payment method at each payment, it is possible to easily use mobile payment and promote spread of cashless payment.

Furthermore, according to the payment system according to the present embodiment, because there is no need for a staff of the store to perform a procedure for visually confirming the payment result information displayed on the user terminal and determining completion or the like, it is possible to prevent an oversight of the confirmation or a fraud such as falsification of the payment result information by the user.

Furthermore, according to the payment system according to the present embodiment, the user only needs to operate the user terminal and can complete the payment without having contact with a device on the store device side or the like, an effect can be obtained that presents an infection with coronavirus or the like.

Note that, in the embodiment described above, in a case where the store device and the payment server are connected in a communicable manner, the cancellation processing may also be requested by transmitting the specified slip number to the payment server by the store device.

Furthermore, in the embodiment described above, at the time of the transaction cancellation processing, a case has been described where the payment to be a target is specified using the slip number shared with the store device as the payment completion processing. However, the embodiment is not limited to this. Similarly, regarding other processing after the payment completion such as an inquiry to the payment server 30, payment processing to be a target can be specified using the slip number.

Furthermore, in the embodiment described above, a case has been described where the transaction information is stored in the transaction information DB in associated with the payment result information including the slip number so as to associate the transaction with the slip number. However, the embodiment is not limited to this. For example, the transaction may also be associated with the slip number with another method such as holding a table, in which a transaction serial number and a slip number are associated, separately from the transaction information DB.

Furthermore, in the embodiment described above, a security function may also be included, for example, by adding an encrypted key to information exchanged between the store device, the user terminal, and the payment server. For example, the encrypted key is embedded in the code image indicating the transaction information displayed on the store device, and the key is included in the payment processing request and the payment result information transmitted and received between the user terminal and the payment server. Then, the store device can determine validity of the payment result information by determining whether or not the key included in the payment result information acquired from the user terminal matches the key embedded in the code image.

Note that there is a case where the store is a tenant in a commercial facility such as a shopping center and an operating company of the commercial facility and a business operator such as a card company have an agreement regarding a commission rate or the like. In this case, the operating company needs to know information regarding transactions and payments of each store. With the typical method, since the store device executes the payment processing with the payment server via a server of the operating company, the operating company can collectively recognize the information regarding the transactions and the payments of each store. With the method of the present embodiment, the payment processing is executed between the user terminal and the payment server without via the server of the operating company. However, because the store device acquires the payment result information from the user terminal, the operating company can recognize the information regarding the transactions and the payments of each store as traditional by aggregating the information that is acquired by the store device by the server of the operating company.

Furthermore, while the above-described embodiment corresponds to a pattern in which the transaction program is stored (installed) beforehand in the storage unit, provision of the program is not limited to this pattern. The program according to the disclosed technology may also be provided in a form stored in a storage medium such as a compact disc read only memory (CD-ROM), a digital versatile disc read only memory (DVD-ROM), or a universal serial bus (USB) memory.

## Claims

1. A transaction program that causes at least one computer to execute a process, the process comprising:
transmitting transaction information to a user terminal;
receiving result information acquired by processing payment of a transaction of the transaction information by a server, from the user terminal, the result information including identification information indicating the payment;
storing the identification information associated with the transaction information in the one or more memories; and
outputting a receipt including identification information.

2. The transaction program according to claim 1, wherein
the receiving includes reading a first code image that indicates result information displayed on the user terminal.

3. The transaction program according to claim 1 or 2, wherein the process further comprising:
displaying a second code image that indicates the transaction information that the user terminal reads.

4. The transaction program according to any one of claims 1 to 3, wherein the process further comprising:
when a request to cancel the transaction is received, displaying a third code image indicating the identification information associated with the transaction and an instruction of transaction cancellation processing that the user terminal reads.

5. A transaction method for a computer to execute a process comprising:
transmitting transaction information to a user terminal;
receiving result information acquired by processing payment of a transaction of the transaction information by a server, from the user terminal, the result information including identification information indicating the payment;
storing the identification information associated with the transaction information in the one or more memories; and
outputting a receipt including identification information.

6. The transaction method according to claim 5, wherein
the receiving includes reading a first code image that indicates result information displayed on the user terminal.

7. The transaction method according to claim 5 or 6, wherein the process further comprising:
displaying a second code image that indicates the transaction information that the user terminal reads.

8. The transaction method according to any one of claims 5 to 7, wherein the process further comprising:
when a request to cancel the transaction is received, displaying a third code image indicating the identification information associated with the transaction and an instruction of transaction cancellation processing that the user terminal reads.

9. A store device comprising:
a control unit configured to:
transmit transaction information to a user terminal,
receive result information acquired by processing payment of a transaction of the transaction information by a server, from the user terminal, the result information including identification information indicating the payment,
store the identification information in association with the transaction information in the one or more memories, and
output a receipt including identification information.

10. The store device according to claim 9, wherein the control unit is further configured to
read a first code image that indicates result information displayed on the user terminal.

11. The store device according to claim 9 or 10, wherein the control unit is further configured to
display a second code image that indicates the transaction information that the user terminal reads.

12. The store device according to any one of claims 9 to 11, wherein the control unit is further configured to
when a request to cancel the transaction is received, display a third code image indicating the identification information associated with the transaction and an instruction of transaction cancellation processing that the user terminal reads.
